Europäisches Patentamt

European Patent Office

Office européen des brevets

(19)

(11) EP 1 538 558 A2

(12) EUROPEAN PATENT APPLICATION

(43) Date of publication:
08.06.2005 Bulletin 2005/23

(51) Int Cl.⁷: G06K 19/077

(21) Application number: 04002843.3

(22) Date of filing: 09.02.2004

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 03.12.2003 JP 2003403969

(71) Applicant: Hitachi, Ltd.
Chiyoda-ku, Tokyo 101-8010 (JP)

(72) Inventors:
• Yoshigi, Hiroshi, c/o Hitachi Ltd.
  Chiyoda-ku Tokyo 100-8220 (JP)
• Ohkawa, Takehiro, c/o Hitachi Ltd.
  Chiyoda-ku Tokyo 100-8220 (JP)

(74) Representative: Strehl Schübel-Hopf & Partner
Maximilianstrasse 54
80538 München (DE)

(54) **RFID with a resonant circuit**

(57)    In an RFID (contactless identification) having a resonant circuit, the resonant frequency is directly affected by variations in the input capacitance of an IC chip due to certain manufacturing factors, causing a direct influence on a power reception efficiency and a communication distance. Thus, an RFID is provided for eliminating a step of correcting such variations, reducing the manufacturing cost, and efficiently receiving the power. An IC chip (3) is connected to an intermediate tap of an antenna coil (1) in series through a capacitor (5). Alternatively, the capacitor (5) is replaced with two capacitors (5, 6), through one (5) of which the IC chip (3) is connected to the intermediate tap of the antenna coil (1).

FIG. 3

**Description**

BACKGROUND OF THE INVENTION

Field of the Invention

The present invention relates to a contactless identification or radio frequency identification (RFID) such as a contactless IC card, a wireless tag, and the like.

Description of the Related Art

In radio frequency identifications (hereinafter abbreviated as "RFID") such as a contactless IC card, a wireless tag, and the like for storing information in an electronic circuit to communicate the information in a contactless manner, an RFID containing no battery receives through an antenna coil an electromagnetic wave at a particular frequency as a carrier, radiated from an antenna of a coupling device, to which a communication is being made. The electromagnetic wave is then converted into DC power within an IC (Integrated Circuit) connected to the antenna coil for use by the IC itself. The IC makes a communication with the coupling device through the antenna of the coupling device and the antenna coil of the RFID.

JP-A-11-306303 discloses a contactless IC card for improving the reliability of the contactless IC card. The IC card has a coil made of a conductor on a substrate, and a conductor formed opposite to the conductor coil to provide a capacitor on the substrate without using discrete parts such as a chip capacitor to prevent a reduction in the coil area which is related to the transmission efficiency.

JP-A-11-353440 discloses a contactless IC card including a circuit, the resonant frequency of which is different due to unevenness in the inductance of a coil, and unevenness in capacitance between terminals of an IC chip, as determined at the time of manufacturing of a card substrate and in which some of coupled capacitors are disconnected to adjust the static capacitance of the capacitor to adjust the tuning of the circuit.

JP-A-2000-278172 discloses a contactless identification which has an intermediate tap on a coil formed of a wire or a conductor, a capacitor connected across the coil, and a load circuit connected between one end of the coil and the intermediate tap to increase the number of turns of the coil for generating more power. Then, the output impedance of a resonant circuit including the coil is matched with the input impedance of the load circuit by appropriately setting the intermediate tap to efficiently transmit the power to the load circuit.

JP-A-2001-188890 discloses a contactless tag which has a coil, two capacitors connected in series with the coil, and an IC connected between the two capacitors and the coil to make up an impedance matching circuit which acts to match the impedance of an antenna with the impedance of the IC to maximize the power transmission efficiency from the antenna to the IC, thereby increasing a communication available distance.

In recent years, growing expectations have been placed on the RFID which, for responding to the expectations, is required to provide communications over a longest possible distance between a coupling device and the RFID for more convenient use thereof.

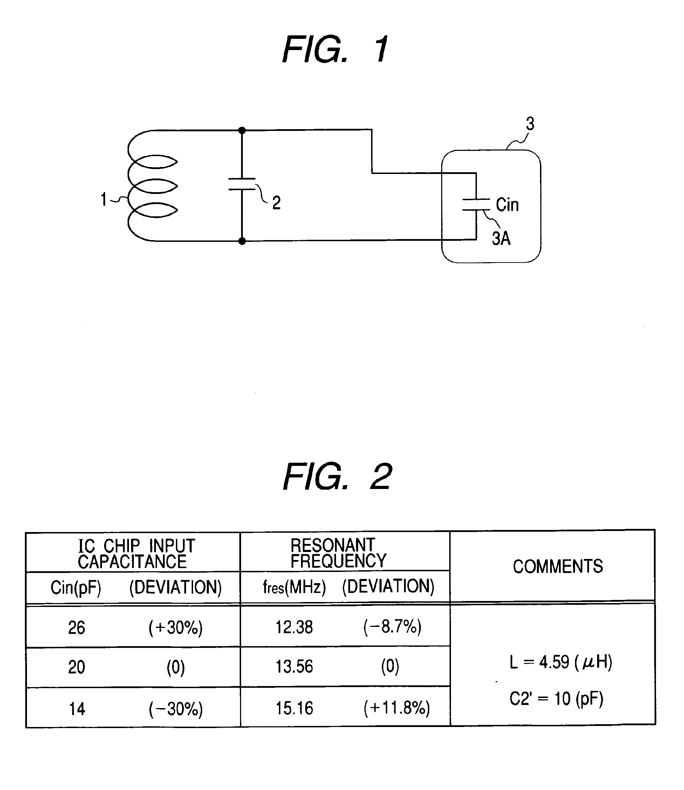

The communication distance between a coupling device and an RFID may be extended by connecting a capacitor in parallel with an antenna coil of the RFID to form a resonant circuit which is matched with the frequency of a carrier, and connecting an IC in parallel with the capacitor, as illustrated in Fig. 1, for efficiently receiving the power. Specifically, a capacitor 2 for parallel resonance is connected across an antenna coil 1, and an input capacitance 3A of an IC 3 is connected in parallel with the capacitor 2. The resonant frequency is determined by the sum of the capacitance of the capacitor 2 and the input capacitance 3A of the IC 3 and the inductance of the antenna coil 1. The capacitor 2 may be formed of a metallic pattern made of an extremely thin dielectric material which is a base material of the RFID. Alternatively, the capacitor 2 may be attached to the RFID as a discrete part.

While a certain manufacturing accuracy can be maintained for the inductance of the antenna coil 1, the capacitor 2 formed of the metallic pattern, or the capacitance as a discrete part, the capacitance between connection terminals of the IC 3 and the antenna coil 1, and the capacitance 3A of the IC chip 3 itself inevitably experience variations in a range of 20 % to 30 % due to a variety of factors in the manufacturing. The variations directly affect the resonant frequency as well as the power reception efficiency and communication distance.

Fig. 2 shows examples of variations (deviation) in the input capacitance and resonant frequency of IC chips, due to certain manufacturing factors, in a current circuit configuration illustrated in Fig. 1 (typically shown in JP-A-11-306303). In the examples of Fig. 2, as the capacitance of the IC chip varies by ±30 % due to certain manufacturing factors, the resonant frequency is affected by approximately ±10 %. Therefore, since such a configuration includes the antenna coil and resonant capacitance connected in parallel, the resonant frequency is determined by the sum of the capacitance between the terminals of the IC chip for connection with the antenna coil, and the capacitance of the resonant capacitor, so that the resonant frequency is directly affected by variations in the input capacitance of the IC chip due to certain manufacturing factors.

Since the capacitance between terminals of an IC chip for connection with an antenna coil, and the capacitance of the IC chip itself vary due to a variety of factors associated with a connection process in the IC manufacturing, a time-consuming and expensive trimming step is required to accurately tune the resonant frequency either by trimming a capacitor formed of a metallic pattern or by trimming circuit portions which form a capacitor within the IC chip, as shown in JP-A-11-353440.

In addition, the resistance between the terminals of the IC chip for connection with an antenna coil also causes a reduction in the Q factor of the antenna resonant circuit, causing the resulting RFID to fail to receive a sufficient voltage and extend a communication available distance.

SUMMARY OF THE INVENTION

The present invention has been made in view of the problems mentioned above, and it is an object of the present invention to inexpensively and simply minimize the influence of an IC chip on a specified resonant frequency, and the influence to the power reception efficiency and communication distance caused due to uneveness in the capacitance between terminals of the IC chip for connection with an antenna coil, the capacitance of the IC chip itself, and the like.

It is another object of the present invention to prevent a reduction in the communication available distance due to a lower Q factor of an antenna resonant circuit caused by the resistance between the terminals of the IC chip.

Representative aspects of the invention disclosed herein will be described below in brief.

The present invention provides a contactless identification which includes an antenna coil having an intermediate tap, a first capacitor connected across the antenna coil, a second capacitor having one terminal connected to the intermediate tap of the antenna coil, and an IC chip connected either to the other terminal of the second capacitor or across the antenna coil.

According to this contactless identification in the foregoing configuration, the resonant frequency thereof is less affected by the input capacitance of the IC chip by the action of the capacitor connected in series with the IC chip. The influence is further reduced by connecting the IC chip to the intermediate tap. Consequently, a large reduction is accomplished in variations of the input capacitance due to certain manufacturing factors to eliminate the trimming for adjustment. In addition, even if the IC chip has a large input capacitance, the capacitor connected in series with the IC chip can make the overall resonant capacitance equivalently smaller, so that the inductance of the antenna coil can be increased, for example, by increasing the number of turns to provide larger induced power.

The present invention can provide an inexpensive RFID which can largely reduce the influence on a shift of the resonant frequency, exerted by variations in the input capacitance of the IC chip due to certain manufacturing factors. In addition, the RFID of the present invention can provide a higher Q factor of the resonant circuit associated with the antenna coil, and extend a communication distance.

Other objects, features and advantages of the invention will become apparent from the following description of the embodiments of the invention taken in conjunction with the accompanying drawings.

BRIEF DESCRIPTION OF THE DRAWINGS

Fig. 1 is a circuit diagram illustrating the basic circuit configuration of a conventional contactless identification (RFID);
Fig. 2 is a table showing the relationship between the input capacitance of an IC chip and the resonant frequency in the conventional RFID;
Fig. 3 is a circuit diagram illustrating the circuit configuration of an RFID according to a first embodiment of the present invention;
Fig. 4 is a circuit diagram illustrating the circuit configuration of an RFID according to a second embodiment of the present invention;
Fig. 5 is a circuit diagram illustrating the circuit configuration of an RFID according to a third embodiment of the present invention;
Fig. 6 is a circuit diagram illustrating the circuit configuration of an RFID according to a fourth embodiment of the present invention;
Fig. 7 is a table showing the relationship between the input capacitance of an IC chip and the resonant frequency in the RFID according to the present invention;
Fig. 8 is a graph showing the resonant frequency versus a received voltage in the RFID according to the present invention;
Fig. 9 is a graph showing the capacitance ratio of capacitors versus the received voltage in the RFID according to the present invention;
Fig. 10 is a top plan view illustrating the RFID according to the third embodiment of the present invention which is implemented in the form of an IC card; and
Fig. 11 is a top plan view illustrating the RFID according to the fourth embodiment of the present invention which is implemented in the form of an IC card.

DETAILED DESCRIPTION OF THE EMBODIMENTS

[First Embodiment]

In the following, several embodiments of the present invention will be described with reference to the accompanying drawings.

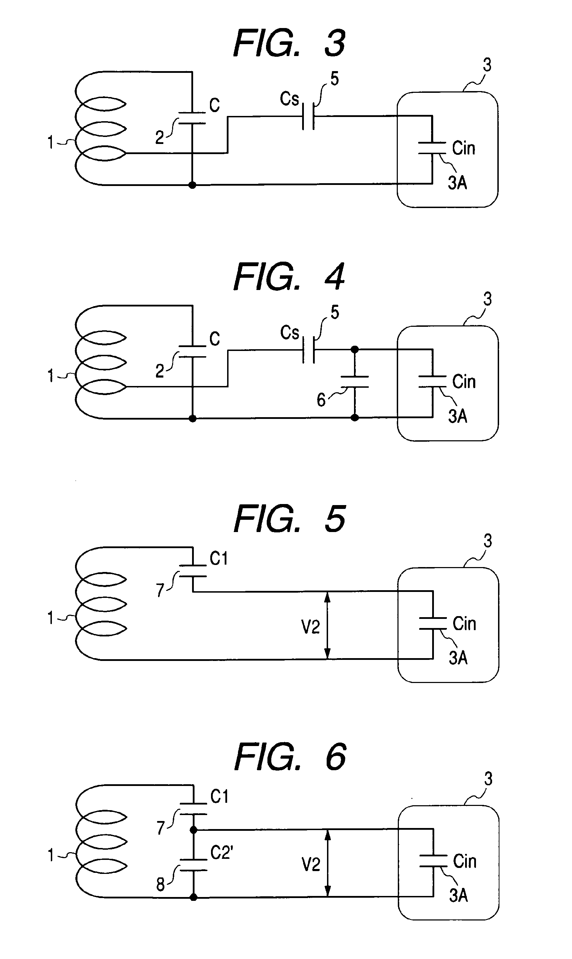

Fig. 3 illustrates a circuit configuration according to a first embodiment of the present invention for application in a contactless IC card. The carrier frequency is selected to be 13.56 MHz, by way of example. An antenna coil 1 has approximately ten turns, and is provided with an intermediate tap around the third turn. An IC chip 3 is connected to the intermediate tap through a capacitor 5 in series.

Since the input capacitance 3A of the IC chip 3 is connected to the capacitor 5 in series, an equivalent capacitance, viewed from the antenna coil 1, is represented by the following Equation 1:

$$Cs/(1+Cs/Cin) \qquad (1)$$

where Cin is the input capacitance 3A, and Cs is the capacitance of the capacitor 5 connected in series with the IC chip 3.

It can be understood also from Equation 1 representing the equivalent capacitance that Cin in combination with C2 in the present invention contributes less to the resonant frequency than Cin alone. Then, since the IC chip 3 is connected to the intermediate tap of the antenna coil 1, the resonant frequency is less affected by variations (unevenness) in the input capacitance due to certain manufacturing factors. It can also be understood from Equation 1 representing the equivalent capacitance that Cs«Cin will further enhance the effect of reducing the influence of variations in Cin, in which case trimming is not required for adjusting the resonant frequency.

As described above, when the resonant frequency is tuned around the carrier frequency of 13.56 MHz, the IC chip 3 having a large input capacitance 3A imposes a reduction in the inductance of the coil in the conventional circuit. According to the present embodiment, on the other hand, the series connection of the IC chip 3 to the capacitor 5 permits the equivalent resonant capacitance to be smaller than Cin, as can be understood from Equation 1 as well, and accordingly provides for an increase in the resonant inductance and the number of turns of the antenna coil 1, resulting in larger power received by the antenna coil 1 and a longer communication distance.

[Second Embodiment]

Fig. 4 illustrates a circuit configuration according to a second embodiment of the present invention for application in a contactless IC card, wherein a capacitor 6 is added in parallel with the IC chip 3 in the first embodiment. With the additional capacitor 6, even if the input capacitance 3A of the IC chip 3 is smaller than the capacitance of the series capacitor 5, the resonant frequency can be less affected by variations in the IC chip 3 due to certain manufacturing factors without fail as long as the capacitor 6 has a capacitance larger than the capacitance of the capacitor 5. Further, the additional capacitor 6 can contribute to an associated reduction in the overall resonant capacitance, an increase in the inductance of the antenna coil 1, and a resulting increase in induced power.

In the configuration illustrated in Fig. 4, the capacitance of the second capacitor 5 may be smaller than the sum of the capacitance 3A of the IC chip 3 and the capacitance of the third capacitance 6, still providing similar advantages to those of the first embodiment.

[Third Embodiment]

Fig. 5 illustrates a circuit configuration according to a third embodiment of the present invention for application in a contactless IC card. The carrier frequency is chosen to be 13.56 MHz, by way of example. As illustrated in Fig. 5, the circuit comprises an antenna coil 1, a capacitor 2, and an IC chip 3, where the IC chip 3 is connected in series with the antenna coil 1 through a capacitor 7.

The equivalent capacitance, viewed from the antenna coil 1, is represented by the following Equation 2:

$$C1/(1+C1/Cin) \qquad (2)$$

where the capacitance C1 of the capacitor 7 is smaller than the input capacitance Cin 3A of the IC chip 3.

By designing the circuit, the inductance of the antenna coil 1 and the capacitance C1 of the capacitor 7 predominantly act on the resonant frequency, resulting in a large reduction in the influence on the resonant frequency exerted by variations in the input capacitance 3A of the IC chip 3 due to certain manufacturing factors as well as elimination of the need for adjustment such as trimming.

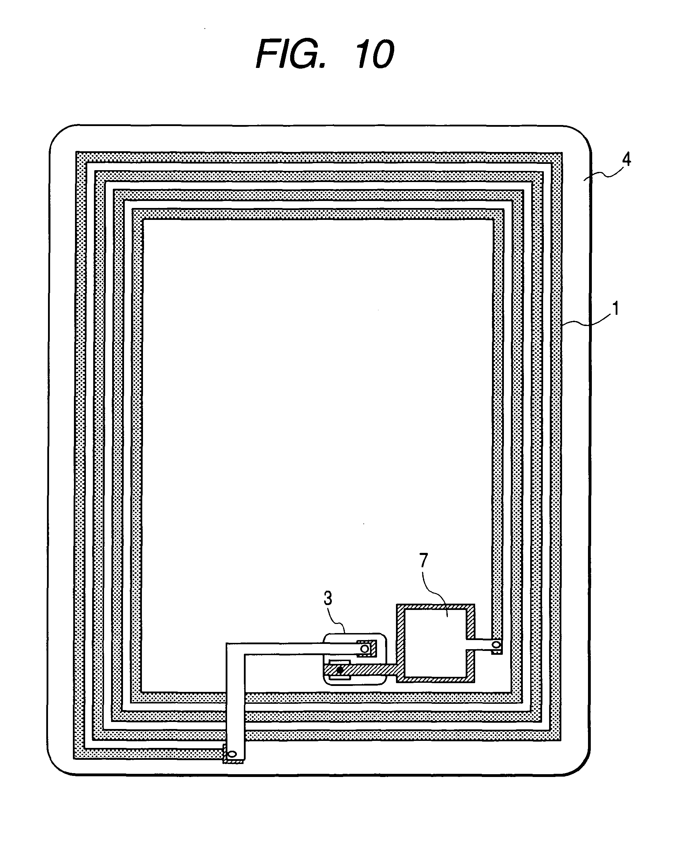

Fig. 10 is a top plan view of the RFID according to the third embodiment of the present invention illustrated in Fig. 5 which is implemented in the form of an IC card.

Referring to Fig. 10, a base 4 is made of an extremely thin polyimide material of 1/50 mm thick, and an antenna coil 1 is formed by a metallic pattern on the back side of the base 4. This corresponds to the antenna coil 1 in Fig. 5. A resonant capacitor 7 is formed by metallic patterns on both sides of the base 4. This capacitor 7 corresponds to the capacitor 7 in Fig. 5. The antenna coil 1 has an outer terminal connected to one terminal of the IC chip 3, the other terminal of which is connected to the back side of the capacitor 7. The antenna coil 1 has an inner terminal connected to the top surface of the capacitor 7.

[Fourth Embodiment]

Fig. 6 illustrates a circuit configuration according to a fourth embodiment of the present invention which has a second capacitor 8 connected in parallel with the IC chip 3, in addition to the components employed in the third embodiment. The capacitance C1 of the first capacitor 7 is smaller than the sum of the input capacitance Cin 3A of the IC chip 3 and the capacitance C2' of the second capacitor 8.

With the foregoing configuration, the magnitude relationship mentioned above can be maintained with certainty even if the input capacitance Cin 3A of the IC chip 3 is relatively small, thereby making it possible to ensure a reduction in the influence of variations in the input capacitance 3A of the IC chip 3 due to certain manufacturing factors. In addition, the foregoing configuration permits the resonant frequency and the inductance of the antenna coil 1 to be freely selected.

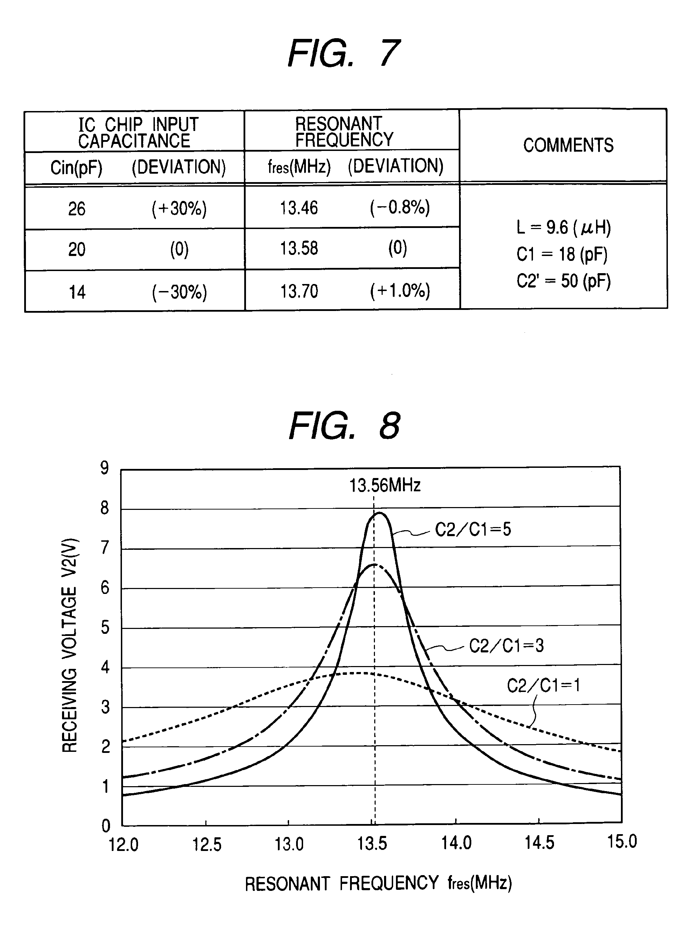

Fig. 7 shows examples of variations (deviation) in the resonant frequency in the configuration of the present invention illustrated in Fig. 6 when the capacitance of the IC chip varies by ±30 % due to certain manufacturing factors. As can be seen from Fig. 7, according to the present invention, even if the capacitance of the IC chip varies by ±30 %, the influence on the resonant frequency is largely reduced to approximately ±1 %.

The present invention can not only largely reduce the influence of variations due to certain manufacturing factors, but also improve the Q factor of the antenna resonant circuit, which is reduced by the input resistance of the IC chip 3, increase a received voltage, and significantly extend a communication available distance.

The received voltage varies in accordance with the capacitance ratio C2/C1 of the capacitors, where C2 is the sum of the input capacitance Cin 3A of the IC chip 3 and the capacitance C2' of the capacitance 8 connected in parallel with the IC chip 3, and C1 is the capacitance of the capacitor 7 connected in series with the IC chip 3.

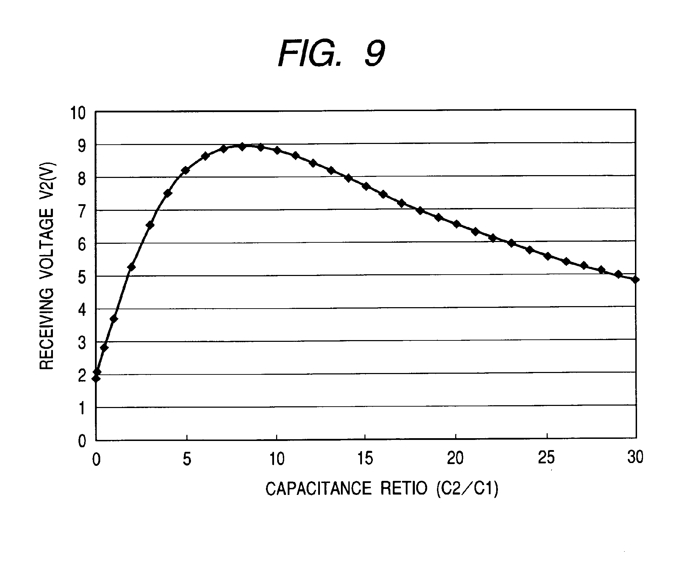

Figs. 8 and 9 show an exemplary voltage V2 (V) which can be received when the capacitance ratio C2/C1 of the capacitors is changed. As can be understood from these graphs, the capacitance ratio C2/C1 is preferably one or more.

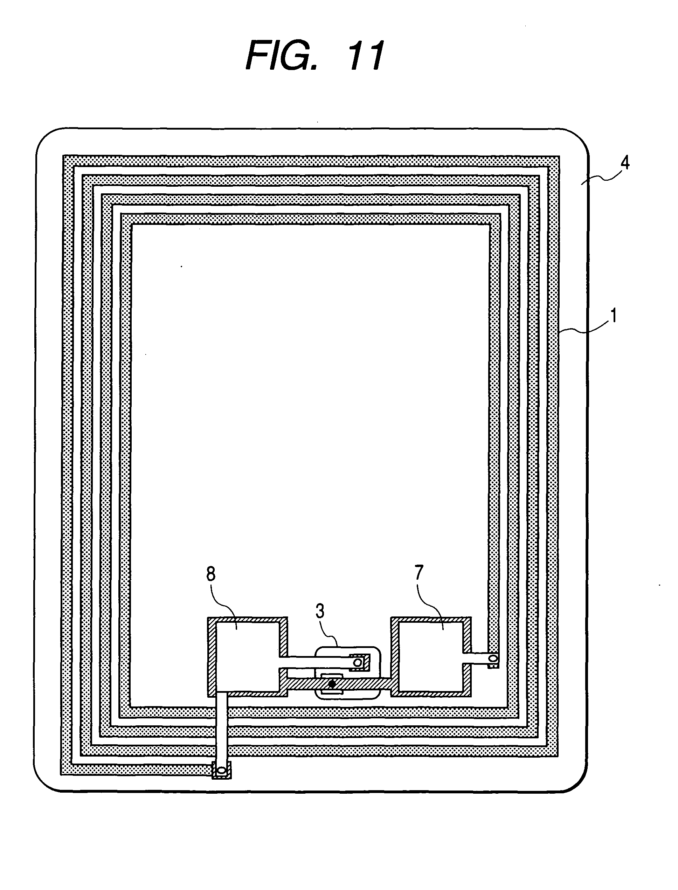

Fig. 11 is a top plan view of the RFID according to the fourth embodiment of the present invention illustrated in Fig. 6 which is implemented in the form of an IC card.

Referring to Fig. 11, a base 4 is made of an extremely thin polyimide material of 1/50 mm thick, and an antenna coil 1 shown in Fig. 6 is patterned by a metallic material on the back side of the base 4. A first capacitor 7 and a second capacitor 8 are patterned by metallic materials on both sides of the base 4. These correspond to the capacitor 7 and capacitor 8 in Fig. 6. The antenna coil 1 has an outer terminal connected to one terminal of the IC chip 3 and to the surface side of the second capacitor 8. The IC chip 3 has the other terminal connected to the back side of the capacitor 7. The top surface of the capacitor 7 is connected to an inner terminal of the antenna coil 1.

The characteristics of the resonant frequency versus the received voltage shown in Figs. 8, 9 are observed in the configuration in the fourth embodiment illustrated in Fig. 6. However, since a basic tendency is common to any RFID configuration which has a capacitor connected in series with an input terminal of an IC chip, so that the RFID's according to the first to third embodiments also have similar tendencies.

While the invention made by the inventors has been described in a rather specific manner with reference to several embodiments thereof, it should be understood that the present invention is not limited to the foregoing embodiments, but may be modified in various manners without departing from the spirit and scope of the invention as defined by the appended claims.

For example, while the resonant frequency is assumed to be equal to the carrier frequency of 13.56 MHz in the foregoing embodiments, the configuration of the present invention is not at all restricted by the carrier frequency, but can be applied to a variety of carrier frequency.

The RFID of the present invention can be implemented in a contactless IC card, a portable terminal, a portable telephone, and the like for use as a variety of tickets such as electronic passenger tickets, identification cards, and the like. The RFID of the present invention can also be implemented as a tag for use in a distribution system.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A contactless identification comprising:

    an antenna coil (1) having an intermediate tap;
    a first capacitor (2) connected across said antenna coil;
    a second capacitor (5) having one terminal connected to said intermediate tap of said antenna coil; and
    an IC chip (3) connected either to the other terminal of said second capacitor or across said antenna coil.

2. A contactless identification according to claim 1, further comprising:

    a third capacitor (6) connected in parallel with said IC chip.

3. A contactless identification according to claim 1, wherein:

    said second capacitor has a capacitance (Cs) smaller than an input capacitance (Cin 3A) of said IC chip.

4.  A contactless identification according to claim 2, wherein:

    said second capacitance has a capacitance smaller than the sum of an input capacitance of said IC chip and the capacitance of said third capacitor connected in parallel with said IC chip.

5.  A contactless identification comprising:

    an antenna coil (1);
    a first capacitor (7); and
    an IC chip (3) connected to said antenna coil in series through said first capacitor, said first capacitor having a capacitance (C1) smaller than an input capacitance (Cin 3A) of said IC chip.

6.  A contactless identification according to claim 5, further comprising:

    a second capacitor (8) connected in parallel with said IC chip,

    wherein said first capacitance has a capacitance smaller than the sum of the input capacitance of said IC chip and a capacitance (C2') of said second capacitor.

7.  A contactless identification according to any of claims 1 to 6, further comprising:

    a base (4),

    wherein said antenna coil comprises a metallic pattern formed on said base, and
    any of said capacitors comprises metallic patterns formed on both sides of said base.

8.  A contactless identification according to any of claim 1 to 6, wherein said contactless identification comprises an IC card.

9.  A contactless identification according to any of claim 1 to 6, wherein said contactless identification comprises a portable terminal.

# FIG. 1

# FIG. 2

| IC CHIP INPUT CAPACITANCE | | RESONANT FREQUENCY | | COMMENTS |
|---|---|---|---|---|
| Cin(pF) | (DEVIATION) | fres(MHz) | (DEVIATION) | |
| 26 | (+30%) | 12.38 | (−8.7%) | |
| 20 | (0) | 13.56 | (0) | $L = 4.59\,(\mu H)$ |
| 14 | (−30%) | 15.16 | (+11.8%) | $C2' = 10\,(pF)$ |

## FIG. 3

## FIG. 4

## FIG. 5

## FIG. 6

# FIG. 7

| IC CHIP INPUT CAPACITANCE | | RESONANT FREQUENCY | | COMMENTS |
|---|---|---|---|---|
| Cin(pF) | (DEVIATION) | fres(MHz) | (DEVIATION) | |
| 26 | (+30%) | 13.46 | (−0.8%) | L = 9.6 ( $\mu$H)<br>C1 = 18 (pF)<br>C2' = 50 (pF) |
| 20 | (0) | 13.58 | (0) | |
| 14 | (−30%) | 13.70 | (+1.0%) | |

# FIG. 8

# FIG. 9

# FIG. 10

# FIG. 11